# EUROPEAN PATENT APPLICATION

(11) **EP 4 570 524 A1**
(43) Date of publication of application: **18.06.2025**
(21) Application number: 24215674.3
(22) Date of filing: 27.11.2024
(51) Int. Cl.: B60C 11/03, B60C 11/12

(54) **PNEUMATIC TIRE AND TIRE MOLD**

(30) Priority: 11.12.2023 JP 2023208386
(71) Applicant: TOYO TIRE CORPORATION, Itami-shi, Hyogo 6640847 (JP)
(72) Inventor: KISHIMOTO, Shinpei, Itami-shi, Hyogo, 6640847 (JP)
(74) Representative: Grosse Schumacher Knauer von Hirschhausen

(57) **Abstract**

A pneumatic tire 1 includes a tread (10) and has a specified rotational direction. The tread (10) includes a plurality of main grooves (20) extending from a portion of the tread (10) adjacent to a tread center line toward a portion of the tread (10) adjacent to a ground contact end, blocks (30) disposed along the main grooves (20) and arranged alternately with the main grooves (20) along a tire circumferential direction; and a slit 80 coupling adjacent main grooves (20) of the main grooves (20) in a tire rotational direction. The slit (80) includes first portions (82, 83) extending along a first direction, and a second portion (84) extending along a second direction that is inclined with respect to the first direction in a plan view of the tread (10). The first portions (82, 83) are disposed at opposite ends of the slit (80) along the length of the slit (80), and the slit (80) has a sipe (85) on a bottom face.

## Description

### TECHNICAL FIELD

The present invention relates to a pneumatic tire and a tire mold.

### BACKGROUND

Directional tires that rotate in a specified rotational direction are known. JP 2018-131047 A, for example, discloses a pneumatic tire including a tread having blocks including sipes with chamfered side faces to increase steering stability and brake performance on dry road surfaces.

### SUMMARY

Snow tires or all-seasons tires require, in addition to increased steering stability and brake performance on dry road surfaces, increased road-surface tracking on snowy road surfaces.

A pneumatic tire according to the present invention includes a tread and has a specified rotational direction. The tread includes a plurality of main grooves extending from a portion of the tread adjacent to a tread center line, or equator, toward a portion of the tread adjacent to a ground contact end; blocks disposed along the main grooves and arranged alternately with the main grooves along a tire circumferential direction; and a slit coupling adjacent main grooves of the main grooves in a tire rotational direction and having a bent shape. The slit includes first portions extending along a first direction, and a second portion extending along a second direction that is inclined with respect to the first direction in a plan view of the tread. The first portions are disposed at opposite ends of the slit along a length of the slit. The slit has a sipe on a bottom face of the slit.

The pneumatic tire according the present invention enables increase in steering stability and brake performance on dry road surfaces and also enables increase in the road-surface tracking on snowy road surfaces.

### BRIEF DESCRIPTION OF DRAWINGS

An embodiment of the present disclosure will be described based on the following figures, wherein:
FIG. 1 is a perspective view partially illustrating a pneumatic tire according to an example embodiment;
FIG. 2 is a plan view illustrating the pneumatic tire according to the example embodiment;
FIG. 3 is an enlarged view partially illustrating a tread pattern in the pneumatic tire according to the example embodiment;
FIG. 4 is an enlarged view partially illustrating a tread pattern in the pneumatic tire according to the example embodiment;
FIG. 5 is a cross sectional view taken along line A-A line in FIG. 4;
FIG. 6 is a cross sectional view taken along line B-B line in FIG. 4
FIG. 7 is a cross sectional view schematically illustrating a tire mold according to an example embodiment; and
FIG. 8 is a plan view of a tread mold face of the tire mold according to the example embodiment.

### DESCRIPTION OF EMBODIMENTS

A pneumatic tire according to an example embodiment of the present invention will be described in detail with reference to the drawings. The embodiment described below is only an example, and the present invention is not limited to the embodiment. In addition, selective combinations of elements of the embodiment described below are within the range of the invention.

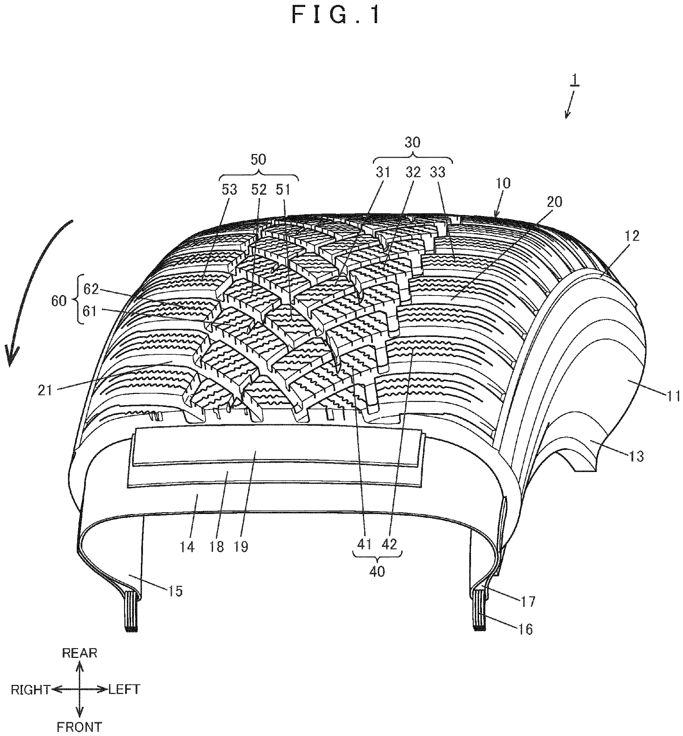

FIG. 1 is a perspective view illustrating a pneumatic tire 1 according to an example embodiment, and also illustrates an internal structure of the pneumatic tire 1. As illustrated in FIG. 1, the pneumatic tire 1 includes a tread 10 that is a portion coming into contact with a road surface, a pair of side walls 11 disposed on opposite sides of the tread 10, and a pair of beads 13 disposed radially inward of the tire with respect of the side walls 11. The pneumatic tire 1 further includes a carcass 14 extending between the beads 13 and an inner liner 15 disposed radially inward of the tire with respect to the carcass 14.

The pneumatic tire 1 is a directional tire that rotates in a specified rotational direction. In the present specification, the "rotational direction" of the tire refers to the rotational direction of the tire mounted on a vehicle that is traveling forward. Further, the term "left and right" that is used for ease of explanation in the present specification refers to left and right with respect to the traveling direction of a vehicle on which the tire is mounted. The pneumatic tire 1 preferably has an indication showing the mounting direction with respect to a vehicle. The pneumatic tire 1 has, on a side face, at least one of characters or arrows indicating the rotational direction, for example. FIG. 1 shows an arrow indicating the rotational direction of the tire. Some of the drawings, including FIG. 1, include arrows indicating the forward, rearward, leftward, and rightward directions with respect to the forward moving direction of the vehicle.

The present specification further includes, regarding the blocks constituting the tread 10, for example, terms "leading side" and "trailing side". The "leading side" of a block, for example, refers to a direction in which the block first comes into contact with a road surface when the pneumatic tire 1 rotates in the direction in which the vehicle travels forward (forward in the rotational direction), and the "trailing side" refers to a direction in which the block comes into contact with the road surface later (rearward in the rotational direction).

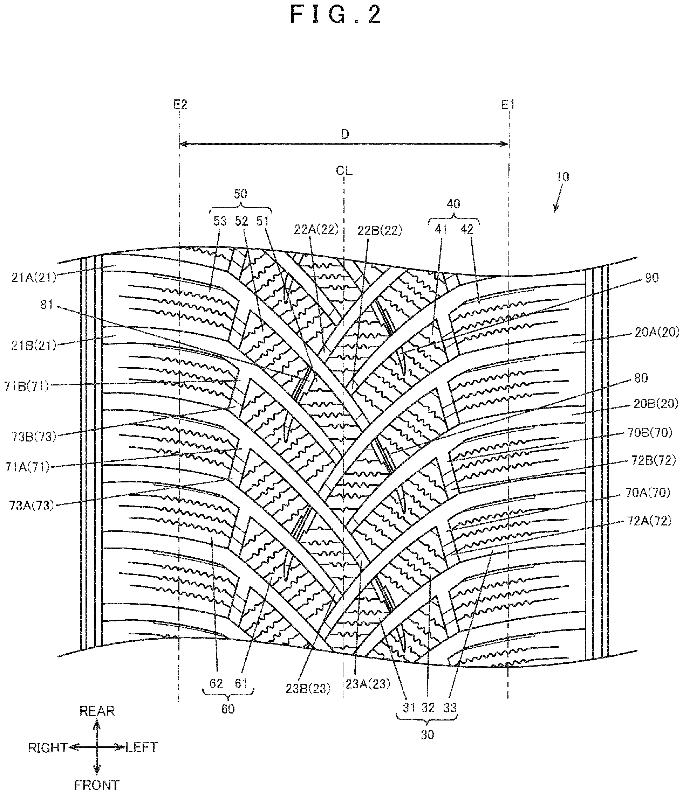

The tread 10 includes main grooves 20 and 21. The main groove 20, 21 extends from a region of the tread 10 adjacent to a tread center line, or equator, CL (see FIG. 2) toward a ground contact end, and has a greater angle of inclination with respect to the tire axial direction in a region closer to the equator CL than in a region adjacent to the ground contact end. More specifically, the main groove 20 (corresponding to a first main groove) extends from a region adjacent to the equator CL toward the ground contact end E1 (corresponding to a first ground contact end), and the main groove 21 (corresponding to a second main groove) extends from a region adj acent to the equator CL toward the ground contact end E2 (corresponding to a second ground contact end).

The tread center line, which is also referred to as "equator", CL as used herein refers to a line along the tire circumferential direction that passes a center of the tread 10 in the tire axial direction (a position from the respective ground contact ends E1 and E2 by an equal distance). Further, the ground contact ends E1 and E2 as used in the specification are defined as opposite ends, in the tire axial direction, of a region that contacts a flat road surface when a predetermined load is applied to the unused pneumatic tire 1 mounted on a normal rim and inflated to a normal internal pressure. The predetermined load for a passenger vehicle corresponds to 88% of the normal load.

The "normal rim" as used herein refers to a rim defined according to the tire standard, and is a "standard rim" according to the Japanese Automobile Tire Manufacturing Association (JATMA) and is a "Measuring Rim" according to the Tire and Rim Association (TRA) and the European Tire and Rim Technical Organization (ETRTO). The "normal internal pressure" is a "maximum air pressure" according to JATMA, the maximum value in Table "TIRE LOAD LIMITS AT VARIOUS COLD INFLATION PRESSURES" in TRA, and an "INFLATION PRESSURE" according to ETRTO. The normal internal pressure is typically 250 kPa for passenger tires, but the normal internal pressure is 290 kPa for tires having labels of Extra Load or Reinforced. The normal load is a "maximum load rating" according to JATMA, the maximum value described in Table "TIRE LOAD LIMITS AT VARIOUS COLD INFLATION PRESSURES" according to TRA, and a "LOAD CAPACITY" according to ETRTO. The normal load for racing kart tires is 392 N.

The tread 10 includes a first block set 30 and a second block set 40 each disposed along the main groove 20 and including a plurality of blocks, and a first block set 50 and a second block set 60 each disposed along the main groove 21 and including a plurality of blocks. The first block set 30 and the second block set 40 are alternately disposed in the tire circumferential direction, with the main groove 20 being interposed between the first block set 30 and the second block set 40. The first block set 50 and the second block set 60 are alternately disposed in the tire circumferential direction, with the main groove 21 being interposed between the first block set 50 and the second block set 60. The blocks are protrusions separated by the main grooves and slits, and protruding outward in the tire radial direction. Thus, regions separated by sipes are not blocks. In the present specification, a groove having a width of 1.5 mm or more is defined as a slit, and a groove having a width less than 1.5 mm is defined as a sipe.

As will be described in detail below, the first block set 30 includes three blocks, and the second block set 40 includes two blocks. Specifically, the first block set 30 includes a first center block 31 located adjacent to the equator CL, a first shoulder block 33 located adjacent to the ground contact end E1, and a first intermediate block 32 disposed between the first center block 31 and the first shoulder block 33. The second block set 40 includes a second center block 41 located adjacent to the equator CL, and a second shoulder block 42 located adjacent to the ground contact end E1.

The first block set 50, similar to the first block set 30, includes three blocks, and the second block set 60, similar to the second block set 40, includes two blocks. Specifically, the first block set 50 includes a first center block 51 located adjacent to the equator CL, a first shoulder block 53 located adjacent to the ground contact end E2, and a first intermediate block 52 disposed between the first center block 51 and the first shoulder block 53. The second block set 60 includes a second center block 61 located adjacent to the equator CL, and a second shoulder block 62 located adjacent to the ground contact end E2. In the present embodiment, the first shoulder block 53 and the second shoulder block 62 have the same shape.

The side wall 11 is disposed, at each side of the tread 10, annularly along the tire circumferential direction. The side wall 11 is a portion of the pneumatic tire 1 that protrudes furthest outward in the tire axial direction, and is gently curved to protrude outward in the tire axial direction. The side wall 11 has a function to prevent damage to the carcass 14. The side wall 11 is designed to be bent most at the time of the cushioning operation of the pneumatic tire 1, and is typically made of a soft rubber having fatigue performance.

The pneumatic tire 1 may include a side rib 12 disposed between each ground contact end E1, E2 of the tread 10 and a portion of the side wall 11 protruding furthest outward in the tire axial direction. The side rib 12 protrudes outward in the tire axial direction and is disposed annularly along the tire circumferential direction. The portions of the pneumatic tire 1 from the ground contact ends E1 and E2 or from regions close to the ground contact ends E1 and E2, to the left and right side ribs 12, are also referred to as shoulders or buttress regions.

The side wall 11 normally includes letters, numbers, and symbols, for example, that are called serial code. The serial code includes information such as a size code, a production time (year and week of production), a production place (factory code).

The bead 13 is located radially inward with respect to the side wall 11, and secured to the rim of the wheel. The bead 13 includes a bead core 16 and a bead filler 17. The bead core 16 is an annular member composed of a steel bead wire and extending over an entire circumference of the tire, and is embedded within the bead 13. The bead filler 17 has a tapered shape extending radially outward of the tire, and is an annular hard rubber member extending over the entire circumference of the tire.

The carcass 14 extends between the beads 13 and is folded back around the bead core 16 for fixation. The carcass 14 includes a carcass cord made of an organic fiber and a topping rubber. The carcass cord is disposed at substantially a right angle (80° or more and 90° or less) with respect to the tire circumferential direction. Examples of the organic fiber used for the carcass cord include, for example, polyester fiber, rayon fiber, aramid fiber, and nylon fiber.

The inner liner 15 covers an inner surface of the tire between the pair of beads 13. The inner liner 15 is composed of an air permeation resistant rubber and has a function to maintain the air pressure of the pneumatic tire 1.

The pneumatic tire 1 further includes a belt 18 disposed radially outward with respect to the carcass 14, and a cap ply 19 covering the entire outer side of the belt 18 in the tire radial direction. The belt 18 is disposed in an overlapping manner on the outer circumferential side on the top of the carcass 14. The belt 18 is composed of belt plies including rubber-coated cords arranged in the direction inclined with respect to the tire circumferential direction. The cords of the belt 18 may be made of any materials including, for example, an organic fiber such as polyester, rayon, nylon, and aramid, or a metal such as steel. The pneumatic tire 1 may further include an edge ply (not shown) disposed radially outward with respect to the cap ply 19 to cover the opposite ends of the belt 18 in the tire axial direction. The cap ply 19 and the edge ply serve to reinforce the belt 18.

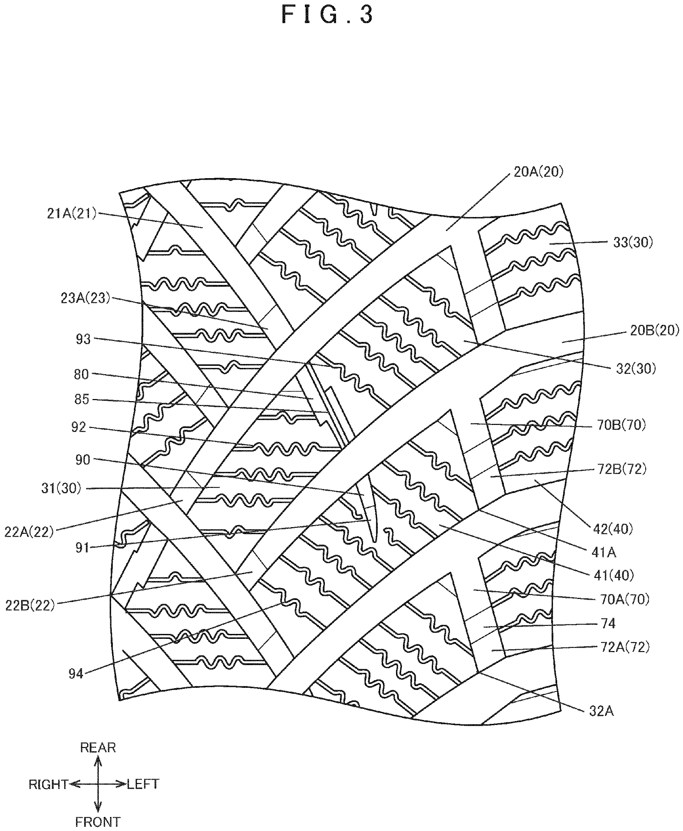

The tread pattern of the pneumatic tire 1 will be described in detail below by reference to FIG. 2 and FIG. 3. FIG. 2 is a plan view of the pneumatic tire 1 (tread 10).

As illustrated in FIG. 2, the tread 10 includes the main grooves 20 and 21 each extending from a portion of the tread 10 adjacent to the equator CL toward the ground contact end and having a greater angle of inclination relative to the tire axial direction in a region adjacent the equator CL than in a region adjacent the ground contact end. The main groove 20 extends from a portion adjacent to the equator CL toward the ground contact end E1, and the main groove 21 extends from a portion adjacent to the equator CL toward the ground contact end E2. The main grooves 20 and 21 are arranged circumferentially on the tire at given intervals.

The main groove 20 includes two types of grooves having different lengths, main grooves 20A and 20B. The main groove 20A is longer than the main groove 20B, and has a length extending past the equator CL to a right region of the tread 10. The main groove 20B is disposed in a left region of the tread 10 and does not extend past the equator CL. The main groove 21 similarly includes two types of grooves having different lengths, main grooves 21A and 21B.

The first block set 30 is disposed on the leading side of the main groove 20A, and the second block set 40 is disposed on the leading side of the main groove 20B. As such, the main groove 20A, the first block set 30, the main groove 20B, and the second block set 40 are sequentially arranged in this order repeatedly along the tire circumferential direction. As described above, the main groove 20A is longer than the main groove 20B, and has a length extending past the equator CL to the right region of the tread 10. The first block set 30 therefore has a length that extends past the equator CL and reaches the right region of the tread 10. The second block set 40, similar to the main groove 20B, has a length that does not extend past the equator CL.

Similarly, in the right region of the tire, the first block set 50 is disposed on the leading side of the main groove 21A, and the second block set 60 is disposed on the leading side of the main groove 21B. As such, the main groove 21A, the first block set 50, the main groove 21B, and the second block set 60 are sequentially arranged in this order repeatedly along the tire circumferential direction. The first block set 50 has a length extending past the equator CL to the left region of the tread 10. The second block set 60 has a length that does not extend past the equator CL. Thus, the first block set 30 and the first block set 50 are arranged in a staggered manner along the equator CL.

In a plan view of the tread 10, the tread pattern according to the present embodiment includes the first block sets 30 and 50 and the second block sets 40 and 60 that are arranged symmetrically with respect to the equator CL, with the first block sets 30 and 50, and the second block sets 40 and 60, being shifted relative to each other by a predetermined circumferential pitch. Specifically, the first block set 30 has the same shape as the first block set 50 that is inverted with respect to the equator CL, and the second block set 40 has the same shape as the second block set 60 that is inverted with respect to the equator CL. This is also the same for the main grooves 20 and 21. The tread pattern according to the present embodiment is well balanced in the left and right direction and is therefore advantageous in enhancement of steering stability.

In a plan view of the tread 10, the main groove 20, the first block set 30, and the second block set 40 are curved to protrude toward the trailing side. Similarly, the main groove 21, the first block set 50, and the second block set 60 are curved to protrude toward the trailing-edge side. As such, all of the main grooves 20 and 21, the first block sets 30 and 50, and the second block sets 40 and 60 are inclined with respect to the tire axial direction to be gradually located on the trailing side from the equator CL toward the ground contact ends E1 and E2.

As described above, the main grooves 20 and 21 have a greater angle of inclination with respect to the tire axial direction in a portion adjacent to the equator CL than in portions adjacent to the ground contact ends E1 and E2. In other words, the main grooves 20 and 21 extend closer to the tire axial direction and thus have a gentler inclination with respect to the tire axial direction as the main grooves 20 and 21 extend from a portion adjacent to the equator CL toward portions adjacent to the ground contact ends E1 and E2. The angle of inclination of the main grooves 20 and 21 with respect to the tire axial direction is, for example, 30° or more and 60° or less, or 40° or more and 50° or less, in a portion adjacent to the equator CL.

The main groove 20 connects to the main groove 21 in the vicinity of the equator CL. The main groove 20 extends from a cross point with the main groove 21 toward the ground contact end E1 and extends past the ground contact end E1 and across the side rib 12 on the left side. The main groove 21 extends from a crossing point with the main groove 20 in the vicinity of the equator CL toward the ground contact end E2 and extends past the ground contact end E2 and across the side rib 12 on the right side.

While the main grooves 20 and 21 may have a uniform width over their entire lengths, in the present embodiment, the width of the main grooves 20 and 21 gradually increases from a portion adjacent to the equator CL toward a portion adjacent to the ground contact ends E1 and E2. This configuration not only enhances drainage performance but also increases a snow-shearing-force that catches and compacts snow to thereby increase the brake performance on a snowy road surface. The width of the main grooves 20 and 21 is, for example, 2.0 mm or more and 10.0 mm or less in a portion adjacent to the equator CL, and is, for example, 3.0 mm or more and 15.0 mm or less in a portion adjacent to the ground contact ends E1 and E2. The main grooves 20 and 21 have the same depth, which is 5.0 mm or more and 15.0 mm or less, for example. In the present specification, the width of a groove (including a slit and a sipe) refers to the width in a profile face along the ground contact face of the tread 10, unless otherwise specified. The depth of a groove refers to a length in the tire radial direction from a profile face along the ground contact face of the tread 10 to the groove bottom, unless otherwise specified.

The main grooves 20 and 21 include bridges 22 and 23, respectively, at the tip end adjacent to the equator CL. Specifically, the bridge 22 includes a bridge 22A disposed at the tip end of the main groove 20A and a bridge 22B disposed at the tip end of the main groove 20B. The bridge 23 includes a bridge 23A disposed at the tip end of the main groove 21A and a bridge 23B disposed at the tip end of the main groove 21B.

The bridges 22 and 23 are protrusions protruding radially outward of the tire from the groove bottoms of the main grooves 20 and 21, and couple the adjacent center blocks. Specifically, the bridge 22A couples the first center block 31 and the second center block 61, and the bridge 22B couples the first center block 31 and the second center block 41. The bridge 23A couples the second center block 41 and the first center block 51, and the bridge 23B couples the first center block 51 and the second center block 61.

The bridges 22 and 23 couple the center blocks along the tire circumferential direction. This configuration increases block rigidity in the vicinity of the equator CL to thereby enhance the traction performance at the time of braking. Further, the bridges 22 and 23 disposed only at tip ends of the respective main grooves achieve high drainage performance. Thus, including the bridges 22 and 23 enables enhanced traction performance at the time of braking while achieving high drainage performance. The length of the bridges 22 and 23 along the main grooves 20 and 21 may be shorter than the length of bridges 72 and 73 along slits 70 and 71, respectively, for example, as will be described below. The length of the bridges 22 and 23 along the main grooves 20 and 21 is, for example, 0.5 mm or more and 5.0 mm or less.

The bridges 22 and 23 preferably have a height that is 30% or more and 70% or less, or 40% or more and 60% or less, of the depth of the main grooves 20 and 21. The bridges 22 and 23 may each include a slope region having an increasing height as the bridges 22 and 23 extend toward the tip end of the main grooves 20 and 21 adjacent to the equator CL. The slope region of the bridges 22 and 23 facilitates flow of the water within the main grooves 20 and 21 toward the ground contact ends E1 and E2, respectively, to thereby increase the drainage performance of the pneumatic tire 1.

The tread 10 further includes a slit 70 that connects the main grooves 20 along the tire rotational direction, and a slit 71 that connects the main grooves 21 along the tire rotational direction. The slits 70 and 71 are grooves having a width that is smaller than the maximum width of the main grooves 20 and 21. The width of the slit 70 is, for example, 2.0 mm or more and 6.0 mm or less.

The slit 70 is inclined circumferentially of the tire gradually away from the ground contact end E1 as the slit 70 extends from the leading side toward the trailing side. The slit 71 is similarly inclined circumferentially of the tire gradually away from the ground contact end E2 as the slit 71 extends from the leading side toward the trailing side. In the present embodiment, the slits 70 and 71 have the same depth as the main grooves 20 and 21. However, the depth of the slits 70 and 71 may be smaller than those of the main grooves 20 and 21.

The slit 70 includes a slit 70A that defines the first intermediate block 32 and the first shoulder block 33, and a slit 70B that defines the second center block 41 and the second shoulder block 42. As described above, the first block sets 30 and the second block sets 40 are alternately arranged in the tire circumferential direction. Thus, the slit 70A and the slit 70B are also arranged alternately in the tire circumferential direction. The slit 70A and the slit 70B have the same shape.

The slit 71, similar to the slit 70, includes a slit 71A that defines the first intermediate block 52 and the first shoulder block 53, and a slit 71B that defines the second center block 61 and the second shoulder block 62. The slit 71A and the slit 71B are arranged alternately along the tire circumferential direction. The slit 71 has a shape corresponding to the shape of the slit 70 that is inverted with respect to the equator CL. The slit 71A and the slit 71B have the same shape.

The slits 70 and 71 have bridges 72 and 73, respectively, at the groove bottom in the end portion on the leading side, similar to the main grooves 20 and 21. The bridge 72 includes a bridge 72A disposed on the slit 70A and a bridge 72B disposed on the slit 70B. The bridge 73 includes a bridge 73A disposed on the slit 71A and a bridge 73B disposed on the slit 71B.

The bridges 72 and 73 are, similar to the bridges 22 and 23, protrusions protruding outward in the tire radial direction from the groove bottoms of the slits 70 and 71, respectively, and connect adjacent center blocks. Specifically, the bridge 72A connects the first intermediate block 32 and the first shoulder block 33, and the bridge 72B connects the second center block 41 and the second shoulder block 42. The bridge 73A connects the first intermediate block 52 and the first shoulder block 53, and the bridge 73B connects the second center block 61 and the second shoulder block 62.

Including the bridges 72 and 73 reduces in-plane contraction around the slits 70 and 71. This facilitates flow of water through the slits 70 and 71 to thereby increase the drainage performance of the pneumatic tire 1. Further, the bridges 72 and 73 disposed at the end portions on the leading side of the slits 70 and 71 increase the traction performance at the time of braking.

The length of the bridges 72 and 73 along the slits 70 and 71, respectively, is preferably 60% or less of the length of the slits 70 and 71, and is more preferably 50% or less. The bridges 72 and 73 having the length that is 60% or less of the length of the slits 70 and 71 secures the volume of the slits 70 and 71 to thereby secure the brake performance on a snowy road surface. In other words, the bridges 72 and 73 having a length that exceeds 60% of the length of the slits 70 and 71 significantly decrease the volume of the slits 70 and 71, which may lower brake performance on a snowy road surface. Also, the length of the bridges 72 and 73 along the slits 70 and 71, respectively, is preferably 10% or more of the length of the slits 70 and 71, and is more preferably 20% or more. The bridges 72 and 73 having the length that is 10% or more of the length of the slits 70 and 71 significantly increases the drainage performance described above, and also significantly increases the traction performance at the time of braking. Therefore, the length of the bridges 72 and 73 along the slits 70 and 71, respectively, is preferably 10% or more and 60% or less of the length of the slits 70 and 71, and is more preferably 20% or more and 50% or less of the length of the slits 70 and 71.

The bridges 72 and 73 preferably have a height that is 30% or more and 70% or less, or 40% or more and 60% or less, of the depth of the slits 70 and 71. In the present embodiment, the bridge 72, 73 includes a slope region 74 (see FIG. 3) having an increasing height toward the leading side of the slit 70, 71. In other words, the slit 70, 71 includes a region having a decreasing depth toward the leading side of the slit 70, 71. The slope region disposed in the bridge 72, 73 facilitates flow of water within the slit 70, 71 toward the main groove 20, 21, thereby increasing drainage performance of the pneumatic tire 1.

The tread 10 further includes, in addition to the slits 70 and 71, a slit 80 that connects the main grooves 20 in the tire rotational direction and a slit 81 that connects the main grooves 21 in the tire rotational direction. The slit 80 defines the first center block 31 and the first intermediate block 32, and the slit 81 defines the first center block 51 and the first intermediate block 52.

The slit 80 is disposed substantially as an extension of the main groove 21A. The slit 80 is opposite to the main groove 21A with the main groove 20A interposed between the slit 80 and the main groove 21A, and is opposite to a slit 90, which will be described below, with the main groove 20B interposed between the slit 80 and the slit 90. Disposing the slit 80 opposite to the main groove 21A with the main groove 20Abeing interposed in between enables accumulation of a lot of snow within the slit 80 during traveling on a snowy road. This results in an increase of the snow-shearing-force for catching and compacting the snow, thereby increasing traction performance on the snowy road surface. A slit 81 is disposed substantially as an extension of the main groove 20A. The slit 81 is opposite to the main groove 20A with the main groove 21A interposed between the slit 81 and the main groove 20A, and is opposite to the slit 90 with the main groove 21B interposed between the slit 81 and the slit 90.

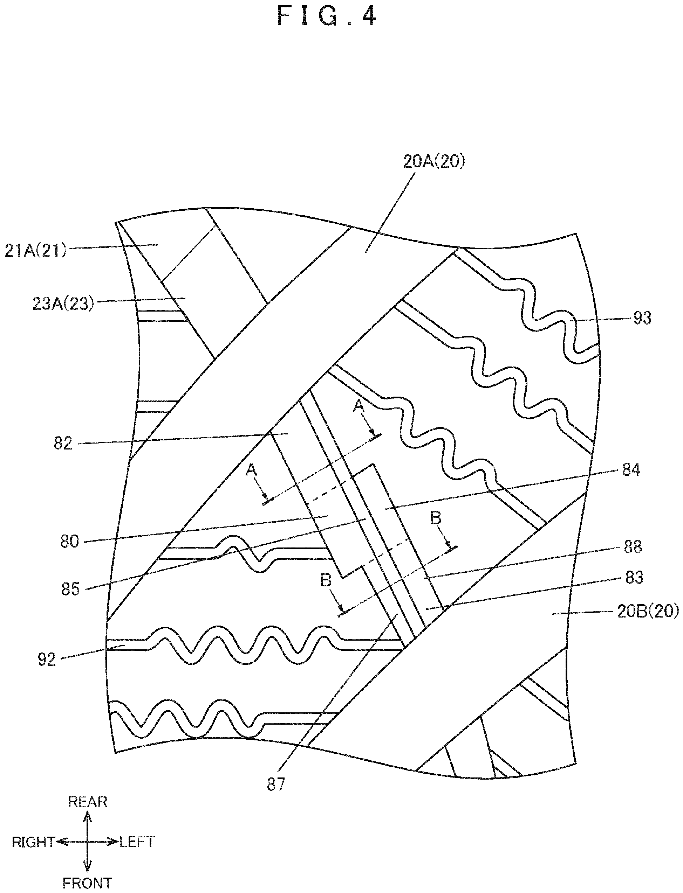

The slits 80 and 81 have a bent shape. As will be described in detail below, the slit 80, 81 includes a first portion 82, 83 (see FIG. 4) extending along a first direction and a second portion 84 (see FIG. 4) extending in a second direction that is inclined with respect to the first direction in a plan view of the tread 10. In the present embodiment, in a plan view of the tread 10, the angle defined by the first direction and the second direction is substantially 90°. As such, the second portion 84 is substantially orthogonal to the first portion 82, 83. The slits 80 and 81 having a bent shape enable accumulation of a lot of snow in the vicinity of the bent portion within the slits 80 and 81 during traveling on a snowy road. This leads to an increase in the snow-shearing-force for catching and compacting the snow to thereby increase traction performance on snowy road surfaces. The slits 80 and 81 have a smaller depth than those of the main grooves 20 and 21 and the slits 70 and 71.

The slit 80, 81 includes, on the bottom face, a sipe 85 (see FIG. 3) extending along the first direction. The sipe 85 is disposed, for example, along the extending direction of the slit 80, 81. Thus, the sipe 85 couples the main grooves 20 and 21 in the tire rotational direction. As will be described in detail below, the sipe 85 disposed on the bottom face of the slit 80, 81 having a bent shape increases steering stability on a dry road surface and also increases road surface tracking on a snowy road surface.

The tread pattern of the pneumatic tire 1 will be described in further detail below by further reference to FIG. 3 that is an enlarged view partially illustrating the tread pattern. As described above, the shape of the first block set 50 is the same as the shape of the first block set 30 that is inverted with respect to the equator CL, and the shape of the second block set 60 is the same as the shape of the second block set 40 that is inverted with respect to the equator CL. Therefore, only the first block set 30 and the second block set 40 will be described below, and the first block set 50 and the second block set 60 will not be described.

As illustrated in FIGs. 2 and 3 and described above, the tread 10 includes the first block sets 30 and the second block sets 40 segmented by the main grooves 20 and having a plurality of blocks. The first block set 30 and the second block set 40 are disposed alternately along the tire circumferential direction. More specifically, the first block set 30 is disposed on the leading side with respect to the main groove 20A, and the second block set 40 is disposed on the leading side with respect to the main groove 20B.

The first block set 30 includes the first center block 31 located adjacent to the equator CL, the first shoulder block 33 located adjacent to the ground contact end E1, and the first intermediate block 32 disposed between the first center block 31 and the first shoulder block 33. The slit 80 that couples two adjacent main grooves 20 in the tire rotational direction is disposed between the first center block 31 and the first intermediate block 32, and the slit 70Athat couples two adjacent main grooves 20 in the tire rotational direction is disposed between the first intermediate block 32 and the first shoulder block 33. Thus, the first center block 31 and the first intermediate block 32 are defined by the slit 80, and the first intermediate block 32 and the first shoulder block 33 are defined by the slit 70A.

The second block set 40 includes the second center block 41 located adjacent to the equator CL, and the second shoulder block 42 located adjacent to the ground contact end E1. The slit 70B that couples two adjacent main grooves 20 in the tire rotational direction is disposed between the second center block 41 and the second shoulder block 42. As such, the second center block 41 and the second shoulder block 42 are defined by the slit 70B.

As described above, the first block set 30 includes three blocks: the first center block 31, the first intermediate block 32, and the first shoulder block 33. The second block set 40 includes two blocks: the second center block 41 and the second shoulder block 42. Here, the noise generated during traveling is significantly affected by the peak values of the frequency of striking sound generated by each block hitting the road surface. In the configuration including the first block set 30 and the second block set 40 having a uniform number of blocks over the entire tire circumference, which is a configuration including the first block set 30 and the second block set 40 having the same number of blocks, the striking sound is likely to occur at a fixed period when the tread 10 hits the road surface, resulting in generation of the peak values of the frequency of the striking sound. This further results in an increase in the noise during traveling. Meanwhile, in the tread pattern according to the present embodiment, the main grooves 20 and 21 are arranged such that the main grooves 20 and 21 are inclined more, with respect to the tire axial direction, in a portion adjacent to the equator CL than in potions adjacent to the ground contact ends E1 and E2, and also the number of blocks included in each block set varies. This configuration allows the periods of the striking sound generated by the tread 10 hitting the road surface to be shifted from each other, which results in dispersion of the frequency of the striking sound to thereby reduce the noise during traveling.

In a plan view of the tread 10, each of the area (S31) of the first center block 31 and the area (S32) of the first intermediate block 32 is preferably smaller than the area (S41) of the second center block 41, and the sum (S3 1+S32) of the area (S31) of the first center block 31 and the area (S32) of the first intermediate block 32 is preferably greater than the area (S41) of the second center block 41. Therefore, the slit 80 that defines the first center block 31 and the first intermediate block 32 is preferably disposed to satisfy the relations of S31 < S41, S32 < S41, and S31 + S32 > S41. The tread pattern that satisfies the relations of S31 < S41, S32 < S41, and S31 + S32 > S41 allows the blocks to have similar sizes to thereby provide a pneumatic tire 1 with excellent wear resistance. In other words, the tread pattern that does not satisfy the relations of S31 < S41, S32 < S41, and S31 + S32 > S41 makes the blocks have significantly different areas and is likely to cause uneven tire wear in small-size blocks.

In a plan view of the tread 10, the area (S31) of the first center block 31 is preferably 75% or more and 125% or less, and is more preferably 80% or more and 120% or less, of the area (S32) of the first intermediate block 32. The first center block 31 having an area (S31) that is 75% or more and 125% or less of the area (S32) of the first intermediate block 32 provides a pneumatic tire 1 with even better wear resistance.

As illustrated in FIG. 3, in a plan view of the tread 10, an outward edge 32A of the first intermediate block 32 in the tire axial direction and an outward edge 41A of the second center block 41 in the tire axial direction are aligned along the tire circumferential direction. The first center block 31 is disposed across the equator CL, and the second center block 41 is not disposed across the equator CL.

The lengths of the first center block 31 and the first intermediate block 32 in the tire axial direction are respectively 10% or more and 30% or less, for example, of a ground contact width D (see FIG. 2). The axial length of the second center block 41 is 15% or more and 40% or less of the ground contact width D, for example.

The second center block 41 includes the slit 90 that extends inward of the second center block 41 from the main groove 20B and terminates within the second center block 41. The slit 90 is disposed substantially as an extension of the main groove 21A and is disposed opposite to the slit 80 with the main groove 20B being disposed between the slit 90 and the slit 80. During traveling of a vehicle on a snowy road, the slit 90 provides a snow-shearing force for catching and compacting the snow. As such, the slit 90 contributes to enhancement of brake performance of the pneumatic tire 1 on snowy road surfaces.

The slit 90 that terminates within the second center block 41 can secure the volume of the second center block 41 to thereby prevent lowering of the block rigidity. This results in an increase in the brake performance on snowy road surfaces while securing the traction performance at the time of braking. In terms of securing the wearing resistance of the pneumatic tire 1, the slit 90 is preferably disposed on the trailing side of the second center block 41.

The slit 90 is inclined both circumferentially and axially of the tire. This configuration enables working of both circumferential and axial edge effects, to thereby more significantly enhance the brake performance on snowy road surfaces. The slit 90 is inclined more in the tire axis direction than in the tire circumferential direction, for example. An example angle of inclination of the slit 90 in the tire axis direction is 60° or more and less than 90°.

The slit 90 has a width at an edge closer to the main groove 20B which is smaller than the width of the slit 70. The width of the slit 90, at an edge closer to the main groove, 20B is 1.5 mm or more and 3.0 mm or less. The slit 90 further includes a narrow region 91 having a decreasing width toward the inside of the second center block 41. As such, the slit 90 has a tapered shape having a decreasing width toward the tip end. The slit 90 having the narrow region 91 further ensures the volume of the second center block 41, inhibiting lowering of the block rigidity. The width of the slit 90 in the narrow region 91 may be decreased linearly or non-linearly.

The depth of the slit 90 may be uniform over the entire extending direction of the slit 90; in the present embodiment, the tip end of the slit 90 has a decreasing depth toward the inside of the second center block 41. The depth of the slit 90 at an end closer to the main groove 20B is substantially the same as the depth of a portion of the main groove 20 including the bridge 22. The depth of the slit 90, at the end adjacent to the main groove 20B, is 30% or more and 90% or less of the depth of the main groove 20 and is preferably 40% or more and 80% or less of the depth of the main groove 20.

As illustrated in FIG. 3, the first center block 31 includes a plurality of sipes (first sipes) 92 traversing the first center block 31, and the first intermediate block 32 includes a plurality of sipes (second sipes) 93 traversing the first intermediate block 32.

In a plan view of the tread 10, the straight line connecting the opposite ends of the sipe 92 in the longitudinal direction extends along the tire axis direction, and the straight line connecting the opposite ends of the sipe 93 in the longitudinal direction is inclined with respect to the tire axis direction. As such, the sipe 92 extends along the tire axial direction, and the sipe 93 extends in the direction that is inclined with respect to the tire axial direction. The sipes 92 and the sipes 93 having different extending directions increase the steering stability on dry road surfaces. The angle of inclination of the sipe 93 with respect to the tire axial direction is, for example, 20° or more and 70° or less.

The sipes 92 and 93 are preferably wavy sipes. In order to increase the brake performance on a snowy road surface, it is necessary to increase the number of sipes to thereby increase the number of edges. However, the increased number of sipes excessively reduces the block rigidity, for example, and decreases the contact area due to collapsing of the blocks. Excessive falling of the blocks reduces steering stability on a dry road surface. In the present embodiment, employing wavy sipes 92 and 93 enables an increase of the edges without increasing the number of sipes. This results in securing of the steering stability on the dry road surface while increasing brake performance on the snowy road surface.

The waves of the sipe 92, 93 are protruding portions that are orthogonal to the longitudinal direction of the sipe 92, 93, and have a triangular shape in a plan view. The sipe 92, 93 includes a linear portion that is a straight line and a wavy portion including a plurality of repeated waves. The linear portion is disposed at each end of the sipe 92, 93 in the longitudinal direction, and the wavy portion is disposed between the linear portions. The wavy portion is bent in a zigzag shape to protrude toward opposite sides of a center line connecting the longitudinal ends of the sipe 92, 93.

The amplitudes of the sipes 92 and 93 are uniform for all waves, for example, and the wavy portions of the sipes 92 and 93 are regularly formed at a predetermined period. An example amplitude of the sipe 92, 93 is 0.5 mm or more and 3.0 mm or less. In the present specification, the amplitude of the sipe refers to a distance from the center line connecting the opposite ends of the sipe in the longitudinal direction to the peak of the maximum wave.

The depth of the sipe 92, 93 is, for example, 10% or more and 100% or less of the depth of the main groove 20. The wavy form of the sipe 92, 93 may have a greater depth than the linear portion. In other words, the sipe 92, 93 may have a greater depth in the center part in the longitudinal direction than in the opposite end parts. Further, each sipe 92, 93 may have a different depth.

The second center block 41 includes a plurality of sipes 94 traversing the second center block 41. The sipe 94 is a wavy sipe, and extends in an inclined manner with respect to the tire axial direction. The angle of inclination of the sipe 94 with respect to the tire axial direction is substantially the same as the angle of inclination of the sipe 93 with respect to the tire axial direction, for example.

The slit 80 will be described in detail below by reference to FIG. 4 to FIG. 6. FIG. 4 is an enlarged view illustrating the vicinity of the slit 80. For convenience of explanation, FIG. 4 indicates boundaries between the first portions 82 and 83, and the second portion 84 with dot lines.

As illustrated in FIG. 4, the slit 80 couples the main grooves 20A and 20B in the tire rotational direction, and has a bent shape. The slit 80 includes the first portions 82 and 83 extending in the first direction, and the second portion 84 extending in the second direction that is inclined with respect to the first direction in a plan view of the tread 10. The two first portions 82 and 83 are disposed at respective opposite ends of the slit 80 in the longitudinal direction. Specifically, the first portion 82 is connected to the main groove 20A, and the first portion 83 is connected to the main groove 20B. The slit 80 having the first portions 82 and 83, and the second portion 84, and having a bent shape, allows snow to enter the inside of the slit 80 and accumulate in the vicinity of the second portion 84, to thereby facilitate catching and compacting of snow during traveling of a vehicle on snowy roads. This results in an increase in the snow-shearing-force for catching and compacting the snow to enhance traction performance on a snowy road surface. In other words, the slit 80 having a linear shape rather than a bent shape fails to sufficiently accumulate snow within the slit 80, which further fails to provide a large snow-shearing-force.

As described above, the slit 80 is disposed opposite to the main groove 21A with the main groove 20A being interposed between the slit 80 and the main groove 21A. The first direction substantially corresponds to the extending direction of the main groove 21A at the leading edge of the main groove 21A. The first portion 82 is therefore disposed substantially as an extension of the main groove 21A with the main groove 20A interposed between the first portion 82 and the main groove 21A. In a plan view of the tread 10, the angle of inclination of the first direction with respect to the tire axis direction is, for example, 40° or more and 90° or less, and is preferably 50° or more and 80° or less.

In the present embodiment, in a plan view of the tread 10, the first direction and the second direction define an angle of about 90°. Therefore, the second portion 84 is orthogonal to the first portions 82, 83. The angle defined by the first direction and the second direction being about 90° enables accumulation of more snow in the vicinity of the second portion 84. This achieves a great snow-shearing-force to enable enhancement of traction performance on a snowy road surface. However, the angle formed by the first direction and the second direction may be 90° or less, such as between 45° and 90°.

The width of the second portion 84 may be the same as or more than the width of the first portions 82 and 83. The second portion 84 having a width that is more than that of the first portions 82 and 83 enables accumulation of more snow in the second portion 84. This achieves a great snow-shearing-force to enable enhancement of traction performance on a snowy road surface. The width of the first portions 82 and 83 is, for example, 1.5 mm or more and 4.0 mm or less, and the width of the second portion 84 is, for example, 2.0 mm or more and 6.0 mm or less.

The first portion 82 and the first portion 83 may have different widths. For example, the width of the first portion 83 located closer to the leading side may be greater than the width of the first portion 82 located closer to the trailing side. The widths of the first portions 82 and 83 may be uniform or may vary in the first direction. For example, the first portions 82 and 83 may be configured to have widths that decrease toward the main grooves 20A and 20B, respectively. Also, the width of the first portion 82 located closer to the trailing side may be smaller toward the main groove 20B, and the width of the first portion 83 located closer to the leading side may be uniform along the first direction.

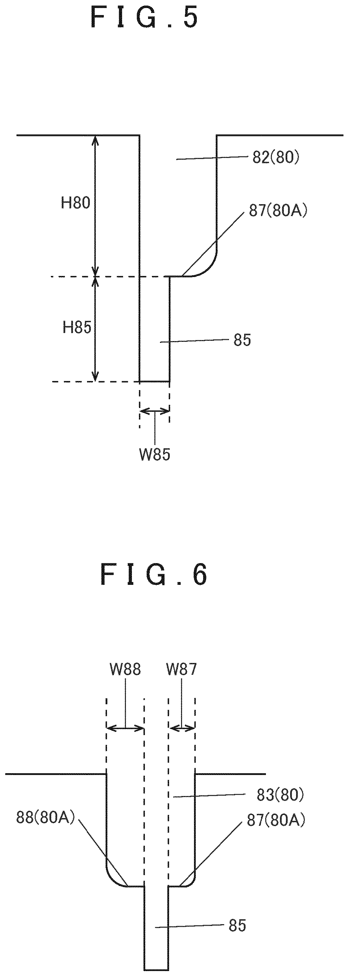

The depth (H80 (see FIGs. 5 and 6)) of the slit 80 is substantially the same as the depth of the slit 90, and specifically is substantially the same as the depth of a portion of the main groove 21 (see FIG. 3) where the bridge 23 (see FIG. 3) is disposed. The depth (H80) of the slit 80 is, for example, 40% or more and 100% or less of the depth of the main groove 20, and is preferably 50% or more and 90% or less, and is more preferably 50% or more and 80% or less. In the present embodiment, the first portions 82 and 83, and the second portion 84 have substantially a uniform depth. However, the first portions 82 and 83, and the second portion 84 may each have different depths. For example, the depth of the second portion 84 may be greater than the depths of the first portions 82 and 83.

As described above, the sipe 85 is disposed on the bottom face 80A of the slit 80. The sipe 85 enables the blocks to move moderately to achieve excellent road surface tracking on a snowy road surface. Further, in a plan view of the tread 10, on receiving loads from above, below, left, and right, the blocks having the sipe 85 interposed between the blocks support each other to thereby enhance the rigidity of the blocks and thus enhance steering stability and brake performance on a dry road surface. Specifically, the sipe 85 disposed on the bottom face 80A of the slit 80 having a bent shape achieves a significant increase in both enhancement of road surface tracking on a snowy road surface and enhancement of steering stability and brake performance on a dry road surface.

In the present embodiment, the sipe 85 is disposed along the length of the slit 80, and the opposite ends of the sipe 85 along the length are connected with the main grooves 20A and 20B, respectively. This configuration further achieves enhancement of steering stability and brake performance on a dry road surface. Although the sipe 85 may have a bent shape, in the present embodiment, the sipe 85 has a linear shape extending in the first direction.

As described above, the opposite ends of the sipe 85 along the length are connected to the main grooves 20A and 20B, respectively. Thus, the bottom face 80A (see FIG. 5 and FIG. 6) of the slit 80 is segmented by the sipe 85 into a first region 87 located closer to the equator CL and a second region 88 located closer to the ground contact end E1. The longitudinal ends of the first region 87 of the slit 80 are connected with the main grooves 20A and 20B, respectively, whereas only one end of the opposite longitudinal ends of the second region 88 of the slit 80, which is located on the leading side, is connected with the main groove 20B. As such, the first region 87 is disposed along the entire length of the slit 80, whereas the second region 88 is not disposed along the entire length of the slit 80. This configuration enables accumulation of more snow within the slit 80 during traveling on snowy roads, resulting in significant snow-shearing-force and increase in the traction performance on a snowy road surface.

Referring further to FIG. 5 and FIG. 6, the cross sectional shape of the slit 80 will be described in detail. FIG. 5 is a cross sectional view taken along line A-A in FIG. 4, and FIG. 6 is a cross sectional view taken along line B-B in FIG. 4.

As illustrated in FIG. 5 and FIG. 6, the width (W85) of the sipe 85 is preferably 0.8 mm or more and 0.9 mm or less, and is more preferably 1.0 mm or more. The sipe 85 having a width (W85) of 0.8 mm or more enables the blocks to move moderately to achieve excellent road surface tracking on a snowy road surface. Further, the blocks arranged with the sipe 85 being interposed between them support each other to increase rigidity and further enhance steering stability and brake performance on a road surface. In other words, the sipe 85 having a width (W85) of less than 0.8 mm may excessively restrict the movement of the blocks and thereby fail to achieve sufficient increase in the road surface tracking on a snowy road surface. The width (W85) of the sipe 85 as used herein refers to the width of the slit 80 on the bottom face 80A.

The width (W85) of the sipe 85 is preferably less than 1.5 mm, more preferably less than 1.4 mm, and further preferably 1.3 mm or less. The sipe 85 having a width (W85) of 1.5 mm or more causes excessive collapse of the blocks at the time of cornering on a dry road surface to thereby lower the steering stability. The width (W85) of the sipe 85 is therefore preferably 0.8 mm or more and less than 1.5 mm, more preferably 0.9 mm or more and 1.4 mm or less, and further preferably 1.0 mm or more and 1.3 mm or less.

As illustrated in FIG. 5, the depth (H85) of the sipe 85 is preferably 50% or more and 120% or less, more preferably 60% or more and 110% or less, and further preferably 70% or more and 100% or less of the depth (H80) of the slit 80. This configuration achieves significant increase in the steering stability during traveling on a dry road surface described above. The depth (H85) of the sipe 85 as used herein refers to a length along the tire radial direction from the bottom face 80A of the slit 80 to the groove bottom of sipe 85.

The sum (H80+H85) of the depth (H80) of the slit 80 and the depth (H85) of the sipe 85 is preferably the same as the depth of the main groove 20 (see FIG. 2), or less than the depth of the main groove 20. In the present embodiment, the side walls of the slit 80 and the sipe 85 adjacent to the groove bottom are gently inclined to have a narrower width toward the groove bottom.

As illustrated in FIG. 6, in the first portion 83 located closer to the leading side, the sipe 85 is disposed to segment the bottom face 80A of the slit 80 into the first region 87 located closer to the equator CL and the second region 88 located closer to the ground contact end E1. In terms of increase in the steering stability on a dry road surface, the ratio (W88/W87) of the width (W88) of the second region 88 with respect to the width (W87) of the first region 87 is 0.5 or more and 1.5 or less, and is more preferably 0.7 or more and 1.3 or less.

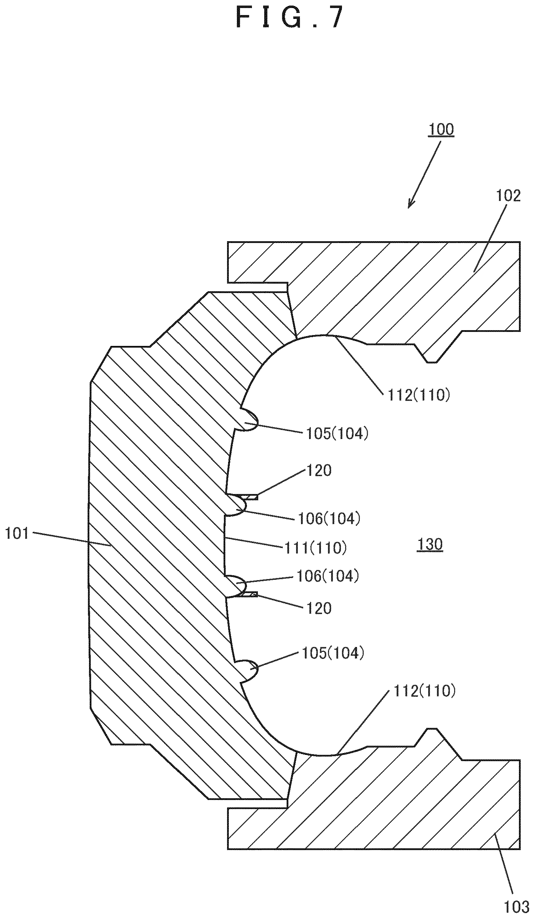

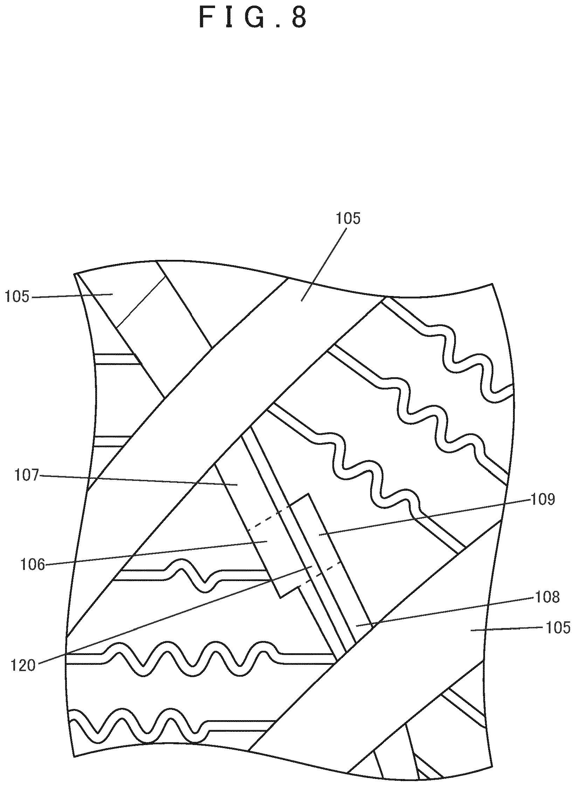

A mold 100 for molding the tread 10 of the pneumatic tire 1 according to the present embodiment will be described in detail below by reference to FIG. 7 and FIG. 8. FIG. 7 is a cross sectional view schematically illustrating the mold 100, and FIG. 8 is a plan view illustrating a tread molding face 111 of the mold 100 when viewed from above, and corresponds to an enlarged view of the vicinity of a third projection 106 which will be described below.

As illustrated in FIG. 7, the mold 100 has a molding face 110 that comes into contact with an outer surface of an unvulcanized tire that is mounted in a cavity 130. The molding face 110 includes a tread molding face 111 for molding the tread 10 (see FIG. 1) of the pneumatic tire 1 and a side molding face 112 for molding the side wall 11 (see FIG. 1) of the pneumatic tire 1.

The mold 100 includes a tread ring 101 comprising a plurality of sectors, and side plates 102 and 103. The tread ring 101 serves to mold the tread 10 of the pneumatic tire 1, and the side plates 102 and 103 serve to mold the side wall 11 of the pneumatic tire 1. In clamping, the sectors circumferentially lie in a row to form a circular tread ring 101. Meanwhile, in mold opening, the tread ring 101 and the side plate 103 rise, and also the sectors are opened radially to be displaced radially outward.

The sectors of the tread ring 101 each has a tread molding face 111 including an exhaust hole (not shown) opened to the tread molding face 111. The air between the outer surface of the unvulcanized tire and the tread molding face 111 is discharged through the exhaust hole during vulcanization molding, thereby preventing molding defects due to rubber loss.

As illustrated in FIG. 7 and FIG. 8, the tread molding face 111 has a plurality of projections 104 for groove molding that protrude inward in the tire radial direction. The projections 104 include, for example, a first projection 105 for use in molding the main grooves 20 and 21 (see FIG. 2) on the tread 10, a second projection (not shown) for use in molding the slits 70 and 71(see FIG. 2), a third projection 106 (corresponding to a bent projection) for use in molding the slits 80 and 81 (see FIG. 2) on the tread 10, and a fourth projection (not shown) for use in molding the slit 90 on the tread 10. The projections 104 illustrated in FIG. 7 are integrally formed with the tread ring 101 by casting, and are not configured as blades, for example, attached to the tread molding face 111.

In the present embodiment, the first projection 105 extends outward in the tire axial direction from the center in the tire axial direction. The second projection and the third projection 106 extend to couple the adjacent first projections together. The fourth projection extends such that only one longitudinal end is coupled with the first projection 105. However, the configuration of the first projection 105, the second projection, the third projection 106, and the fourth projection is not limited to this example.

The tread ring 101 including the projections 104 comprises a metal material, such as aluminum alloy including AC4 and AC7, for example.

As illustrated in FIG. 8, the third projection 106 has a bent shape. In a plan view of the tread molding face 111, the third projection 106 includes two third portions 107 and 108 extending in a third direction, and a fourth portion 109 inclined with respect to the third direction. The two third portions 107 and 108 are disposed at opposite ends of the third projection 106 along the length, respectively. A sipe blade 120 further protrudes from the inward side of the third projection 106 in the tire radial direction.

The sipe blade 120 has a planar shape, for example. The sipe blade 120 comprises a metal material and may comprise stainless steel, for which SUS303, SUS304, SUS630, and SUS631, for example, are preferably employed. When a three-dimensional molding machine is used, 17-4PH stainless steel corresponding to SUS304L and SUS630 is preferably employed.

In a plan view of the tread molding face 111, the sipe blade 120 preferably protrudes from the bent projection such that a side face of the sipe blade 120 at least partially corresponds to a side face of the third projection 106. This configuration enables increase in the strength of the third projection 106, thereby reducing deformation of and damage to the third projection 106 during tire molding.

As described above, the tread 10 of the pneumatic tire 1 according to the present embodiment has the slits 80 and 81 including the first portions 82 and 83 extending in the first direction and the second portion 84 extending in the second direction that is inclined with respect to the first direction in a plan view of the tread 10. The first portions 82 and 83 are disposed at the respective opposite ends of the slit 80, 81 along the length. The slit 80, 81 enables accumulation of a lot of snow within the slit 80, 81. This results in achieving of great snow-shearing-force to thereby increase the traction performance on a snowy road surface. The slit 80 includes the sipe 85 on the bottom face 80A,. The sipe 85 enables the blocks to move moderately during traveling to achieve excellent road surface tracking on a snowy road surface. Further, receiving loads from above, below, left, and right in a plan view of the tread 10, the blocks disposed with the sipe 85 being interposed between the blocks support each other to increase rigidity of the blocks and enhance steering stability and brake performance on a dry road surface. In other words, the pneumatic tire 1 according to the present embodiment enables significant increase in both road surface tracking on a snowy road surface and steering stability and brake performance on a dry road surface.

The design of the embodiment described above may be modified as appropriate within a range that does not impair the object of the present invention. For example, while in the above embodiment the first block set 30 includes three blocks and the second block set 40 includes two blocks, the present invention is not limited to this example, and the number of blocks of the first block set 30 and the number of blocks of the second block set 40 may be the same. Alternatively, the first block set 30 may include four blocks and the second block set 40 may include three blocks, for example.

### Reference Signs List

1 pneumatic tire, 10 tread, 11 side wall, 12 side rib, 13 bead, 14 carcass, 15 inner liner, 16 bead core, 17 bead filler, 18 belt, 19 cap ply, 20, 20A, 20B main groove (first main groove), 21, 21A, 21B main groove (second main groove), 22, 22A, 22B, 23, 23A, 23B bridge, 30 first block set, 31 first center block, 32 first intermediate block, 32A outward edge, 33 first shoulder block, 40 second block set, 41 second center block, 41A outward edge, 42 second shoulder block, 50 first block set, 51 first center block, 52 first intermediate block, 53 first shoulder block, 60 second block set, 61 second center block, 62 second shoulder block, 70, 70A, 70B, 71, 71A, 71B slit, 72, 72A, 72B, 73, 73A, 73B bridge, 74 inclination region, 80, 81 slit, 80A bottom face, 82, 83 first portion, 82A side wall, 84 second portion, 85 sipe, 85A side wall, 87 first region, 88 second region, 90 slit, 91 narrow region, 92 sipe (first sipe), 93 sipe (second sipe), 100 mold (tire mold), 101 tread ring, 102, 103 side plate, 104 projection, 105 first projection, 106 third projection (bent projection), 107, 108 third portion, 109 fourth portion, 110 molding face, 111 tread molding face, 112 side molding face, 120 sipe blade, 130 cavity.

## Claims

1. A pneumatic tire (1) comprising a tread (10) and having a specified rotational direction,
the tread (10) including:
a plurality of main grooves (20) extending from a portion of the tread (10) adjacent to a tread center line toward a portion of the tread (10) adjacent to a ground contact end;
blocks disposed along the main grooves (20) and arranged alternately with the main grooves (20) along a tire circumferential direction; and
a slit (80) coupling adjacent main grooves (20) of the main grooves (20) in a tire rotational direction and having a bent shape, wherein
the slit (80) includes first portions (82, 83) extending along a first direction, and a second portion (84) extending along a second direction that is inclined with respect to the first direction in a plan view of the tread (10),
the first portions (82, 83) are disposed at opposite ends of the slit (80) along a length of the slit (80), and
the slit (80) has a sipe (85) on a bottom face of the slit (80).

2. The pneumatic tire according to claim 1, wherein
the sipe (85) has opposite ends along a length of the sipe (85), the opposite ends being connected with the main grooves (20).

3. The pneumatic tire according to claim 1 or 2, wherein
the sipe (85) has a width of 0.8 mm or more and less than 1.5 mm.

4. The pneumatic tire according to any one of claims 1 to 3, wherein
the sipe (85) extends along the first direction.

5. The pneumatic tire according to any one of claims 1 to 4, wherein
the slit (80) has a bottom face that is segmented by the sipe (85) into a first region (87) closer to the tread center line than to the ground contact end and a second region (88) located closer to the ground contact end than to the tread center line,
the first region (87) has opposite ends along the lengths of the slit (80), the opposite ends being connected to the main grooves (20), and
the second region (88) has opposite ends along the lengths of the slit (80), of which only one end located frontward in the tire rotational direction is connected to the main grooves (20).

6. The pneumatic tire according to any one of claims 1 to 5, wherein
the sipe (85) has a depth that is 50% or more and 150% or less of a depth of the slit (80).

7. The pneumatic tire according to any one of claims 1 to 6, wherein
the first direction and the second direction define an angle of 45° or more and 90° or less.

8. The pneumatic tire according to any one of claims 1 to 7, wherein
the width of the slit (80) in the second portion (84) is greater than the width of the slit (80) in the first portion (82, 83).

9. The pneumatic tire according to any one of claims 1 to 8, wherein
the main grooves include:
a first main groove (20) extending from a portion adjacent to the tread center line toward a first ground contact end at a first end in a tire axial direction; and
a second main groove (21) extending from a portion adjacent to the tread center line toward a second ground contact end at a second end in the tire axial direction, and
the slit (85) is disposed opposite to the second main groove (21) with the first main groove (20) being interposed between the slit (85) and the second main groove (21).

10. The pneumatic tire according to any one of claims 1 to 9, wherein
the main grooves (20) are inclined further, with respect to the tire axial direction, in a portion adjacent to the tread center line than in a portion adjacent to ground contact end.

11. The pneumatic tire according to any one of claims 1 to 10, wherein
the blocks include a center block (31) disposed adjacent to the tread center line, a shoulder block (33) disposed adjacent to the ground contact end, and an intermediate block (32) disposed between the center block (31) and the shoulder block (33), and
the slit (80) separates the center block (31) and the intermediate block (32).

12. The pneumatic tire according to any one of claims 1 to 11, wherein
the blocks include a first block set (30) and a second block set (40) disposed alternately along a tire circumferential direction, with the main grooves being interposed between the first block set (30) and the second block set (40),
the first block set (30) includes a first center block (31) disposed adjacent to the tread center line, a first shoulder block (33) disposed adjacent to the ground contact end, and a first intermediate block (32) disposed between the first center block (31) and the first shoulder block (33),
the second block set (40) includes a second center block (41) disposed adjacent to the tread center line and a second shoulder block (42) disposed adjacent to the ground contact end, and
the slit (80) separates the first center block (31) and the first intermediate block (32).

13. A tire mold (100) comprising:
a molding face configured to come into contact with an outer face of an unvulcanized tire; and
a sipe blade (120) attached to the molding face, wherein
the molding face has a plurality of projections (104) for molding grooves, the projections (104) protruding inward in a tire radial direction,
the projections (104) include a bent projection (106) having a bent shape,
in a plan view of the molding face, the bent projection (106) includes third portions (107, 108) extending along a third direction and a fourth portion (109) inclined with respect to the third direction,
the third portions (107, 108) are disposed at opposite ends of the bent projection (106) along a length, respectively, and
the sipe blade (120) protrudes from the bent projection (106).

14. The tire mold according to claim 13, wherein
in a plan view of the molding face, the sipe blade (120) protrudes from the bent projection (106) such that a side face of the sipe blade (120) at least partially corresponds to a side face of the bent projection (106).
